# EUROPEAN PATENT SPECIFICATION

(11) **EP 4 549 071 B1**
(45) Date of publication and mention of the grant of the patent: **25.11.2026**
(21) Application number: 23849835.6
(22) Date of filing: 07.07.2023
(51) Int. Cl.: B23K 9/04, B23K 9/095, B33Y 10/00, B33Y 30/00, B33Y 50/02, B23K 15/00, B23K 26/14, B23K 26/342, B23K 31/12

(54) **METHOD FOR CONTROL INFORMATION CORRECTION FOR CONTROLLING AN ADDITIVE MANUFACTURING DEVICE**
VERFAHREN ZUR KORREKTUR VON STEUERINFORMATIONEN FÜR DIE STEUERUNG EINER VORRICHTUNG ZUR ADDITIVEN FERTIGUNG
PROCÉDÉ DE CORRECTION D'INFORMATIONS DE COMMANDE POUR COMMANDER UN DISPOSITIF DE FABRICATION ADDITIVE

(30) Priority: 05.08.2022 JP 2022125616
(43) Date of publication of application: 07.05.2025
(73) Proprietor: KABUSHIKI KAISHA KOBE SEIKO SHO (KOBE STEEL, LTD.), Hyogo 651-8585 (JP)
(72) Inventor: SANO, Moe, Kobe-shi, Hyogo 651-2271 (JP)
(74) Representative: Müller-Boré & Partner Patentanwälte PartG mbB
(86) International application number: PCT/JP2023/025365
(87) International publication number: WO 2024/029276

(56) References cited:
- JP-A- 2017 144 458
- JP-A- 2019 089 100
- JP-A- 2021 085 662
- JP-A- 2021 085 662
- JP-A- 2021 192 963
- US-A1- 2019 025 798
- US-B1- 6 823 230

## Description

The present invention relates to a method for correcting control information for controlling an additive manufacturing device, see claim 1. a

### BACKGROUND ART

In recent years, there has been an increasing need to use a 3D printer as a production means, and in particular, research and development have been carried out toward a practical application of additive techniques using metal materials. However, in the additive manufacturing using welding beads, for example, in a case in which a bead formation trajectory (path) is formed in a pointed folded angular shape, a gap is generated between the folded angular path and a path inside the folded angular path, and it is difficult to fill the entire inner side of the folded angle with a welding bead. For example, Patent Literature 1 proposes a method in which a gap is removed by correcting a path to reduce an overlap between beads on the inside of a folded angle, and manufacturing quality is improved.

JP 2019 089100 A (describing the preamble of claim 1) relates to a manufacturing method of a laminated molding that forms a weld bead layer by adjoining weld beads which melt and solidify filler metal and repeatedly laminating a next weld bead layer on the formed weld bead layer. In a cross section orthogonal to a longitudinal direction of the weld beads, a new weld bead is formed in the way that one recess formed by at least three weld beads already formed is filled.

US 2019/025798 A1 describes a trajectory determination device, wherein a CAD data acquisition unit acquires shape data representing the shape of a three-dimensional structure, a trajectory data generating unit and layering conditions adjusting unit generate, on the basis of the shape data acquired by the CAD data acquisition unit, control information which is information for controlling a layering device for layering molten metal for forming the structure and which indicates the trajectory for the layering device and/or layering conditions when the layering device layers molten metal such that the upper surface of one layer of a plurality of layers of molten metal layered is flat, and a control program output unit outputs the control information generated by the trajectory data generating unit and the layering conditions adjusting unit.

### CITATION LIST

### PATENT LITERATURE

Patent Literature 1: Chinese Patent Publication No. 110899905

### SUMMARY OF INVENTION

### TECHNICAL PROBLEM

One reason for the above-described gap is that an outer edge portion of a bead formed in the folded angular path is rounded, and an inner edge portion is pointed. Therefore, a weld amount of the bead may be increased so as to fill the gap (underfill) generated in the bead edge portions, and when a path is added to a narrow region, a material is oversupplied unless welding conditions are appropriately adjusted, and a bead additive height is increased as compared with that of other portions. This also applies to a T-shaped path in which another bead abuts against the side of the bead, and a gap is generated at an intersection portion at which the beads abut against each other, thereby causing the same problem as described above.

In this way, there is a demand for the establishment of a technique for building a narrow portion, which is a corner portion in which the path has a folded angular shape or a T-shaped intersection portion, at a uniform height while preventing underfill.

An object of the present invention is to provide a method for correcting control information for controlling an additive manufacturing device, for making it possible to form beads having a uniform additive height without causing underfill in a narrow portion formed by the beads.

### SOLUTION TO PROBLEM

The object of the present invention is solved by the method for correcting control information for controlling an additive manufacturing device according to independent claim 1. Additional embodiments are defined in the dependent claims.

An example for better understanding the invention is a control information correction device for correcting control information for controlling an additive manufacturing device that forms bead layers by overlapping a part of adjacent beads obtained by welding a molten processing material to a surface to be processed while moving a processing position along a path, and builds a three-dimensional manufactured object by depositing the bead layers, the device including: a design information acquisition unit configured to acquire design information related to the path and a shape of the beads; an overlap prediction unit configured to obtain bead models of the beads formed in the bead layer based on the design information and obtaining a first overlap distribution by predicting an overlap region in which the bead models overlap each other; an additional amount calculation unit configured to specify a narrow portion in which an overlap between the bead models is insufficient based on the first overlap distribution, and calculate an additional weld amount of the processing material that complements the insufficient overlap in the narrow portion; and an information correction unit configured to correct the control information according to the additional weld amount, in which the additional weld amount is a total value of an underfill complementary amount of the processing material with which an underfill portion generated by the bead models in the bead layer is filled and a height adjustment complementary amount for aligning a fusion surface formed by fusing the processing material corresponding to the underfill complementary amount and a part of the beads corresponding to the bead models around the underfill portion with a surface height around the underfill portion.

Another example for better understanding the invention is a control information correction device for correcting control information for controlling an additive manufacturing device that forms bead layers by overlapping a part of adjacent beads obtained by welding a molten processing material to a surface to be processed while moving a processing position along a path, and builds a three-dimensional manufactured object by depositing the bead layers, the method including: a design information acquisition unit configured to acquire design information related to the path and a shape of the beads; a shape measurement unit configured to measure the shape of the beads in the bead layer formed based on the design information; an additional amount calculation unit configured to calculate an additional weld amount that is a total value of an underfill complementary amount of the processing material with which an underfill portion generated by the beads in the bead layer is filled and a height adjustment complementary amount for aligning a fusion surface formed by fusing the processing material corresponding to the underfill complementary amount and a part of the beads around the underfill portion with a surface height around the underfill portion according to a shape measurement result of the beads; and an information correction unit configured to correct the control information according to the additional weld amount.

Yet another example for better understanding the invention is a program for executing a procedure of correcting control information for controlling an additive manufacturing device that forms bead layers by overlapping a part of adjacent beads obtained by welding a molten processing material to a surface to be processed while moving a processing position along a path, and builds a three-dimensional manufactured object by depositing the bead layers, the program causing a computer to execute: a procedure of acquiring design information related to the path and a shape of the beads; a procedure of obtaining bead models of the beads formed in the bead layer based on the design information and obtaining a first overlap distribution by predicting an overlap region in which the bead models overlap each other; a procedure of specifying a narrow portion in which an overlap between the bead models is insufficient based on the first overlap distribution, and calculating an additional weld amount of the processing material that complements the insufficient overlap in the narrow portion; and a procedure of correcting the control information according to the additional weld amount, in which the additional weld amount is a total value of an underfill complementary amount of the processing material with which an underfill portion generated by the bead models in the bead layer is filled and a height adjustment complementary amount for aligning a fusion surface formed by fusing the processing material corresponding to the underfill complementary amount and a part of the beads corresponding to the bead models around the underfill portion with a surface height around the underfill portion.

Yet another example for better understanding the invention is a program for executing a procedure of correcting control information for controlling an additive manufacturing device that forms bead layers by overlapping a part of adjacent beads obtained by welding a molten processing material to a surface to be processed while moving a processing position along a path, and builds a three-dimensional manufactured object by depositing the bead layers, the program causing a computer to execute: a procedure of acquiring design information related to the path and a shape of the beads; a procedure of measuring the shape of the beads in the bead layer formed based on the design information; a procedure of calculating an additional weld amount that is a total value of an underfill complementary amount of the processing material with which an underfill portion generated by the beads in the bead layer is filled and a height adjustment complementary amount for aligning a fusion surface formed by fusing the processing material corresponding to the underfill complementary amount and a part of the beads around the underfill portion with a surface height around the underfill portion according to a shape measurement result of the beads; and a procedure of correcting the control information according to the additional weld amount.

### ADVANTAGEOUS EFFECTS OF INVENTION

According to the present invention, it is possible to correct the control information to the additive manufacturing device so that the welding beads having a uniform height can also be formed without causing underfill in the case in which the narrow portion is generated by the beads to be formed.

### BRIEF DESCRIPTION OF DRAWINGS

[FIG. 1] FIG. 1 is an overall configuration diagram of an additive manufacturing device.
[FIG. 2A] FIG. 2A is a diagram illustrating a determination procedure of a path of welding beads constituting a deposited body in a cross section orthogonal to a longitudinal direction of the welding beads.
[FIG. 2B] FIG. 2B is a diagram illustrating a determination procedure of a path of welding beads constituting a deposited body in a cross section orthogonal to a longitudinal direction of the welding beads.
[FIG. 2C] FIG. 2C is a diagram illustrating a determination procedure of a path of welding beads constituting a deposited body in a cross section orthogonal to a longitudinal direction of the welding beads.
[FIG. 3] FIG. 3 is a diagram illustrating an example of models in consideration of an overlap between adjacent beads.
[FIG. 4] FIG. 4 is a diagram illustrating a model that reproduces a shape of a welding metal dripped onto a layer side.
[FIG. 5] FIG. 5 is a functional block diagram of a first configuration example of a control information correction device.
[FIG. 6] FIG. 6 is a flowchart illustrating a procedure of a control information correction method.
[FIG. 7] FIG. 7 is a diagram illustrating a part of an in-layer distribution of the welding beads.
[FIG. 8] FIG. 8 is a partially enlarged diagram illustrating bent portions in FIG. 7 in an enlarged manner.
[FIG. 9] FIG. 9 is a diagram illustrating a continuous overlap region in the bent portions corresponding to FIG. 7.
[FIG. 10] FIG. 10 is a diagram schematically illustrating a predicted distribution of an additive height in the bent portions of the bead models.
[FIG. 11A] FIG. 11A is a diagram illustrating a path formed in a spiral shape.
[FIG. 11B] FIG. 11B is a diagram illustrating a spiral bead model formed in the path illustrated in FIG. 11A.
[FIG. 12] FIG. 12 is an enlarged diagram illustrating the details of a part of a path end part in FIG. 11B.
[FIG. 13] FIG. 13 is a functional block diagram of a second configuration example of the control information correction device.
[FIG. 14] FIG. 14 is a schematic diagram illustrating a shape sensor provided in a welding torch.
[FIG. 15] FIG. 15 is a graph illustrating a shape profile which is a measurement result made by the shape sensor.
[FIG. 16] FIG. 16 is a diagram illustrating another example of an operation of moving a processing position.
[FIG. 17] FIG. 17 is a diagram illustrating another example of an operation of moving a processing position.

### DESCRIPTION OF EMBODIMENTS

Hereinafter, configuration examples of the present invention will be described in detail with reference to the drawings. Here, an example of an additive manufacturing device for manufacturing a manufactured object by depositing welding beads with arc welding will be described, and a method for manufacturing a manufactured object and a configuration of an additive manufacturing device are not limited thereto.

### <Configuration of Additive Manufacturing Device>

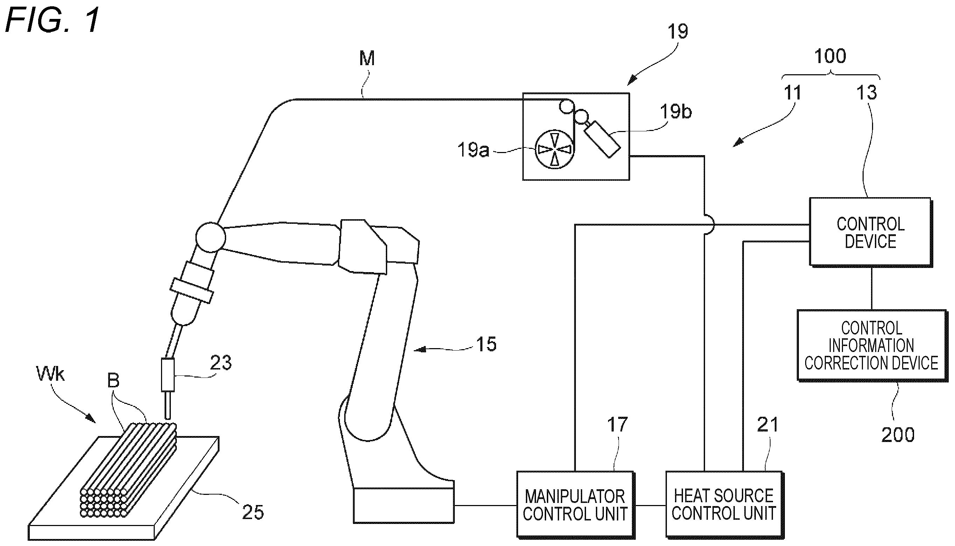

FIG. 1 is an overall configuration diagram of an additive manufacturing device. An additive manufacturing device 100 includes a manufacturing unit 11 and a control device 13. The additive manufacturing device 100 forms welding beads (also referred to as beads) B by welding a melted processing material to a surface to be processed while moving a processing position along a path indicating a manufacturing path, and builds a three-dimensional manufactured object Wk. The control device 13 outputs various control information to the manufacturing unit 11 to collectively control an operation of the manufacturing unit 11. The above-described movement of the processing position is not limited to changing a formation position of the welding beads B by driving the manipulator 15 (to be described later) of the manufacturing unit 11, and various forms are adopted according to a configuration of the additive manufacturing device to be described later.

A control information correction device 200 for correcting control information for controlling the additive manufacturing device 100 is connected to the control device 13. The control information correction device 200 may be connected to the control device 13 to constitute a part of the additive manufacturing device 100, may be provided separately from the additive manufacturing device 100, and may be connected to the control device 13 via communication such as a network or via a storage medium.

The manufacturing unit 11 includes the manipulator 15, a manipulator control unit 17, a filler metal supply unit 19, and a heat source control unit 21.

The manipulator control unit 17 controls the manipulator 15 and the heat source control unit 21. A controller (not illustrated) is connected to the manipulator control unit 17, and an operator can instruct any operation of the manipulator control unit 17 via the controller.

The manipulator 15 is, for example, an articulated robot, and a filler metal M is supported by a welding torch 23 provided on a tip end shaft so as to be continuously supplied. The welding torch 23 holds a filler metal (also referred to as a welding wire) M in a state of protruding from a tip end. A position and posture of the welding torch 23 can be freely set three-dimensionally within a range of degrees of freedom of a robot arm constituting the manipulator 15. The manipulator 15 preferably has six or more degrees of freedom, and is preferably capable of freely changing an axial direction of a heat source at a tip end thereof. The manipulator 15 may be in various forms, such as an articulated robot having four or more axes illustrated in FIG. 1 or a robot having angle adjustment mechanisms on two or more orthogonal axes.

The welding torch 23 includes a shield nozzle (not illustrated), and is supplied with shield gas from the shield nozzle. The shield gas blocks the atmosphere, prevents oxidation, nitridation, and the like of molten metal during welding, and reduces welding failures. An arc welding method used in this configuration may be any one of a consumable electrode type such as coated arc welding or carbon dioxide gas arc welding, and a non-consumable electrode type such as the Tungsten Inert Gas (TIG) welding or plasma arc welding, and is appropriately selected depending on an object to be built. Here, gas metal arc welding will be described as an example. In the case of the consumable electrode type, a contact tip is disposed inside the shield nozzle, and the filler metal M to which a current is supplied is held by the contact tip. The welding torch 23 generates an arc from a tip end of the filler metal M in a shield gas atmosphere while holding the filler metal M.

The filler metal supply unit 19 supplies the filler metal M toward the welding torch 23. The filler metal supply unit 19 includes a reel 19a around which the filler metal M is wound, and a feeding mechanism 19b that feeds the filler metal M from the reel 19a. The filler metal M is fed to the welding torch 23 while being fed forward or backward by the feeding mechanism 19b as necessary. The feeding mechanism 19b is not limited to a push type disposed on a filler metal supply unit 19 side to push out the filler metal M, and may be a pull type or a push-pull type disposed on the robot arm or the like.

The heat source control unit 21 is a welding power source that supplies electric power required for welding by the manipulator 15. The heat source control unit 21 adjusts a welding current and a welding voltage to be supplied at the time of forming beads by melting and solidifying the filler metal M. In addition, a filler metal feeding speed of the filler metal supply unit 19 is adjusted in conjunction with welding conditions such as the welding current and the welding voltage set by the heat source control unit 21.

A heat source for melting the filler metal M is not limited to the above-described arc. For example, a heat source using another method such as a heating method using both an arc and a laser, a heating method using plasma, or a heating method using an electron beam or a laser may be used. In the case of heating by an electron beam or a laser, a heating amount can be more finely controlled, and a state of a bead to be formed can be more appropriately maintained, thereby contributing to further improvement in quality of an additive structure. In addition, a material of the filler metal M is not particularly limited, and for example, types of the filler metal M to be used may be different according to properties of a manufactured object Wk such as mild steel, high-tensile steel, aluminum, aluminum alloy, nickel, and nickel-base alloy.

The control device 13 collectively controls the above-described units. The control device 13 is implemented by hardware using an information processing device such as a personal computer (PC).

The additive manufacturing device 100 having the above-described configuration operates according to a manufacturing program created based on an additive plan of the manufactured object Wk. The manufacturing program includes a large number of command codes, and is created based on an appropriate algorithm according to various conditions such as a shape, a material, and a heat input amount of the manufactured object Wk. When the filler metal M to be fed is melted and solidified while moving the welding torch 23 according to the manufacturing program, linear welding beads B which are molten and solidified bodies of the filler metal M are formed on a base 25. That is, the manipulator control unit 17 drives the manipulator 15 and the heat source control unit 21 based on a predetermined manufacturing program provided from the control device 13. The manipulator 15 forms the welding beads B by moving the welding torch 23 while melting the filler metal M with an arc, according to a command from the manipulator control unit 17. By sequentially forming and depositing the welding beads B in this manner, the manufactured object Wk having a desired shape can be obtained.

Next, an additive plan of the manufactured object to be built by the additive manufacturing device 100 will be described.

The additive plan is determined based on a predetermined algorithm according to conditions such as the shape of the manufactured object to be built and the specifications of each unit constituting the additive manufacturing device 100. Specifically, the additive plan includes information on a trajectory (hereinafter also referred to as a "path") along which the welding torch 23 is moved, information on welding conditions for forming a welding bead, and the like. A specific determination procedure of the additive plan is known, and thus the description thereof is omitted here.

### <Manufacturing Plan and Model>

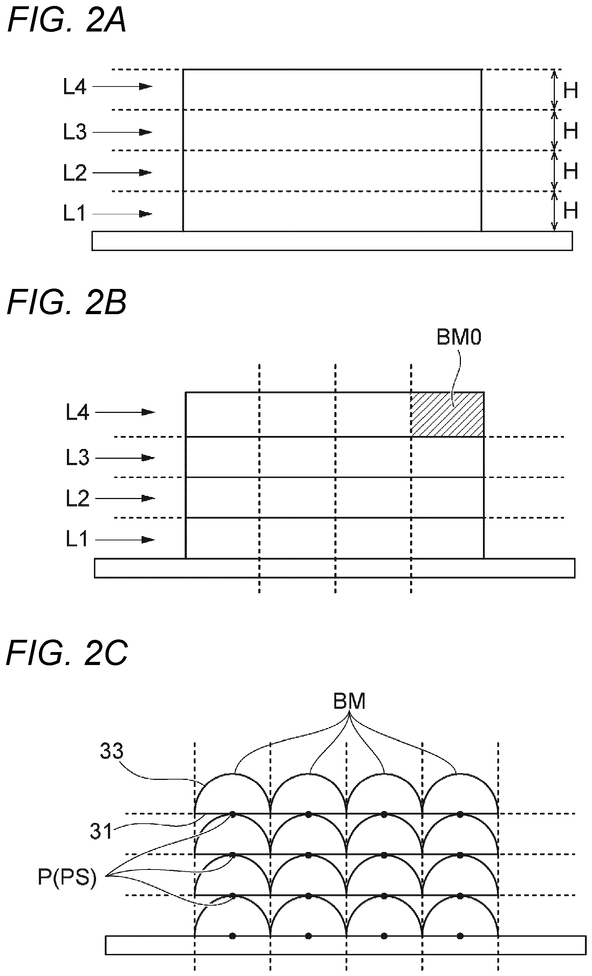

FIGS. 2A, 2B, and 2C are diagrams illustrating a determination procedure of a path of welding beads constituting a deposited body in a cross section orthogonal to a longitudinal direction of the welding beads.

First, a shape of the manufactured object is acquired based on, for example, shape data such as CAD data. Then, as illustrated in FIG. 2A, a target shape So of a manufactured object to be manufactured is sliced into a plurality of layers L1, L2, L3, and L4 according to a predetermined bead height H of the welding beads. The number of layers to be divided and the bead height can be freely set, a specific method for dividing a shape is not particularly limited, and known means can be adopted.

As illustrated in FIG. 2B, the divided layers L1, L2, L3, and L4 are divided into a plurality of rectangular bead models BM0 so as to correspond to a cross-sectional shape of the welding beads. Accordingly, the layers L1, L2, L3, and L4 are divided into the plurality of rectangular bead models BM0. During the division of the rectangular bead models BM0, conditions may be specified such that a bead cross-sectional area is made constant in the cross section orthogonal to the bead longitudinal direction for each rectangular bead model BM0.

As illustrated in FIG. 2C, the plurality of divided rectangular bead models BM0 are fitted to a semicircular shape, which is a simple geometric figure illustrated as an example. Here, each rectangular bead model BM0 is changed to a semicircular bead model BM having a base 31 and an arc 33 and having a shape close to a shape of an actual welding bead. Although the shape of the bead model BM to be fitted is any shape, when a relation between welding conditions and a bead shape is managed as a database in advance, a model having an appropriate shape may be set with reference to the database.

For example, a midpoint of the base 31 is set to a target position P of the welding bead as a representative position of the obtained semicircular bead model BM. The target position P, which is the midpoint, is a line of a point group along the longitudinal direction of the bead model BM that is continuous in a depth direction in FIG. 2C, and the line serves as a path PS along which the welding beads are formed. The path PS is set for each of the plurality of bead models BM. The path PS includes information on the target position at which a welding bead is formed and information on a planned height (bead height H) of the welding bead. In addition to obtaining the path PS by applying the bead models BM to the entire manufactured shape, the paths PS in which the manufactured shape is partially generated may be copied in parallel to obtain the paths PS of the entire manufactured shape.

Here, an example of another shape of the bead model BM will be described.

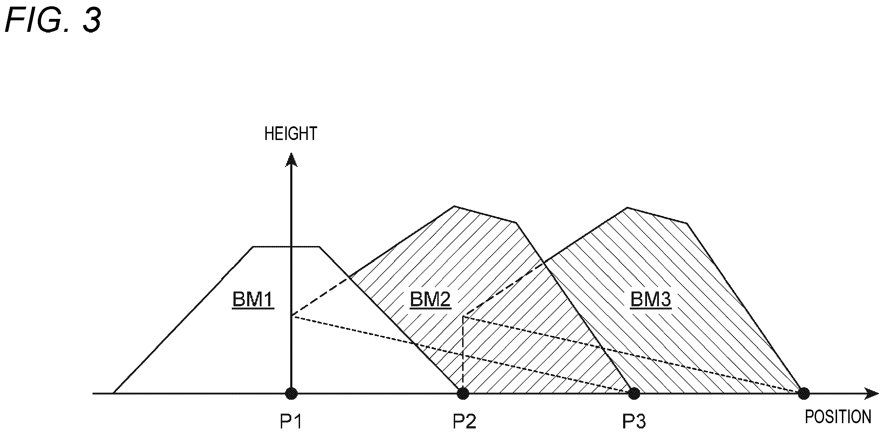

FIG. 3 is a diagram illustrating an example of models in consideration of an overlap between adjacent beads. FIG. 3 illustrates three model shapes in the cross section orthogonal to the longitudinal direction of the welding beads. In each model, a cross-sectional shape of a model BM1 in a reference path P1 is trapezoidal, a model BM2 in a path PS2 is provided adjacent to the model BM1, and a model BM3 in a path PS3 is provided adjacent to the model BM2. The models BM2 and BM3 partially overlap the model arranged on a left side in FIG. 3. Specifically, the models BM2 and BM3 basically have the same trapezoidal shape as the model BM1, and a base of a trapezoid on a side opposite to a model BM1 side is inclined by rotating the trapezoid by a predetermined angle clockwise while maintaining a cross-sectional shape as it is around one end of the base of the trapezoid. A portion of the model BM2 overlapping the model BM1 is a region of the model BM1, and a lower region of the model BM2 not provided in the model BM1 is included in a region of the model BM2. Similarly, a portion of the model BM3 overlapping the model BM2 is a region of the model BM2, and a lower region of the model BM3 not provided in the model BM2 is included in a region of the model BM3.

As a result, a shape of the model BM2 is a polygon (pentagon) along one oblique side of the model BM1, and a shape of the model BM3 is a polygon (pentagon) along one oblique side of the model BM2. In this way, each of the BM1, BM2, and BM3 has a shape more approximate to a cross-sectional shape of an actual welding bead.

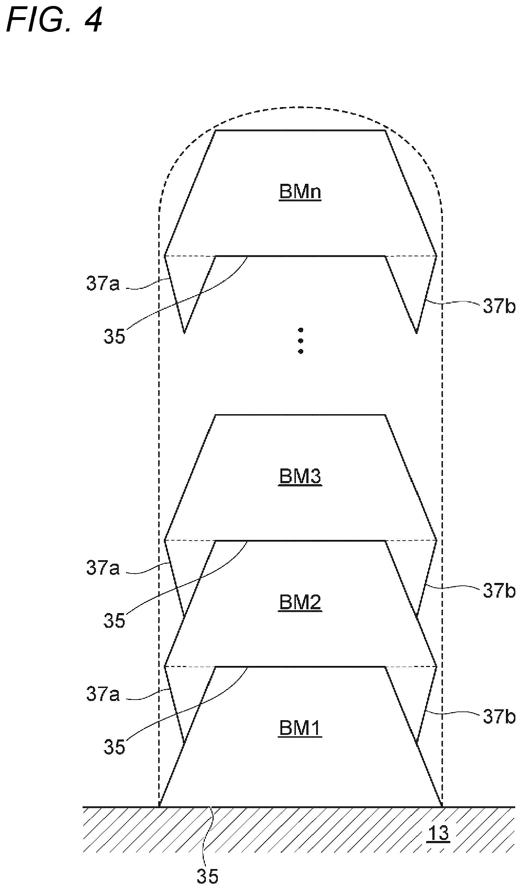

FIG. 4 is a diagram illustrating a model that reproduces a shape of a welding metal dripped onto a lower layer side. FIG. 4 also illustrates model shapes in the cross section orthogonal to the longitudinal direction of the welding beads.

For the model BM1, which has a trapezoidal cross-sectional shape and is deposited on a base 27, and the upper trapezoidal bead models BM2, BM3, ···, BMn (n is an integer) among the models BM2, BM3, ···, BMn above the model BM1, dripping portions 37a and 37b extending downward are added to both ends of the base 35. Cross-sectional shapes of the dripping portions 37a and 37b are both triangular with an end of the base 35 as one side, and a shape and an area of the dripping portions 37a and 37b are set according to the welding conditions of the welding beads and the path. The dripping portion 37a and the dripping portion 37b may have the same shape or different shapes. Instead of providing a pair of dripping portions 37a and 37b, the dripping portions 37a and 37b may be provided on only one end of the base 35 of the trapezoidal model.

By setting the models BM2, BM3, ···, BMn each provided with the dripping portions 37a and 37b as bead models for manufacturing plan, the bead height of the welding bead is affected by the dripping of the molten metal generated in the welding beads. Accordingly, even under conditions under which the molten metal of the welding beads such as an overhang portion is likely to drip, a predicted shape of a contour of the welding bead is likely to be matched with an actual shape.

The shape of the model can also be determined according to the welding conditions. Examples of the welding conditions include a welding current, a welding voltage, a movement speed (movement rod speed) of the torch, and a filler metal feeding speed.

For example, the bead height H from a base surface for the bead formation to a top portion of the welding bead may be obtained according to the formula (1), and a bead width LW in a direction orthogonal to the longitudinal direction of the welding bead may be obtained according to the formula (2). [Math. 1] $\begin{matrix}H = {C}_{1} + {C}_{2} {W}_{f} + {C}_{3} {T}_{S} + {C}_{4} {W}_{f}^{2} + {C}_{5} {T}_{s}^{2} + {C}_{6} {W}_{f} {T}_{s} \\ LW = {D}_{1} + {D}_{2} {W}_{f} + {D}_{3} {T}_{S} + {D}_{4} {W}_{f}^{2} + {D}_{5} {T}_{s}^{2} + {D}_{6} {W}_{f} {T}_{s}\end{matrix} \begin{matrix}formula \left(1\right) \\ formula \left(2\right)\end{matrix}$
Ts: torch moving speed
Wf: filler metal feeding speed
C1 to C6: coefficient
D1 to D6: coefficient

The model shape may be various shapes such as the semicircular shape, the trapezoidal shape, a shape close to the trapezoidal shape, a polygonal shape, and an elliptical shape, and is not particularly limited. In addition, a model shape closest to the welding conditions to be set may be searched for and determined from a database in which the welding conditions and parameters such as a weld cross-sectional area, a bead height, and a bead width are stored in association with each other. Furthermore, the model shape may be determined using an approximate expression created based on the above-described database.

### <First Configuration Example of Control Information Correction Device>

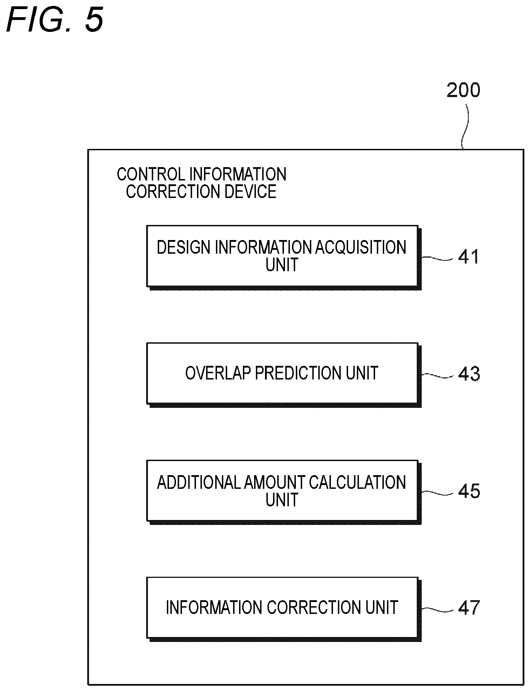

FIG. 5 is a functional block diagram of a first configuration example of the control information correction device 200. The control information correction device 200 includes a design information acquisition unit 41, an overlap prediction unit 43, an additional amount calculation unit 45, and an information correction unit 47.

Similar to the control device 13, the control information correction device 200 is implemented by hardware using the information processing device such as a personal computer (PC). A control function of the control information correction device 200 is implemented by a control device (not illustrated) reading and executing a program having a specific function stored in a storage device. Examples of the control device include a processor such as a central processing unit (CPU), a micro processor unit (MPU), and a graphics processing unit (GPU), or a dedicated circuit. Examples of the storage device include a memory such as random access memory (RAM) and read only memory (ROM), and a storage such as a hard disk drive (HDD) and a solid state drive (SSD).

The details of the units of the control information correction device 200 will be described later, and general functions are as follows.

The design information acquisition unit 41 acquires design information related to the path and the shape of the welding beads. The overlap prediction unit 43 obtains bead models formed in a bead layer based on the acquired design information, and obtains a distribution of an overlap region at which the beads overlap each other in the bead layer. The additional amount calculation unit 45 specifies a narrow portion in which an overlap between the beads is insufficient based on the obtained distribution of the overlap region, and calculates an additional weld amount of a processing material (welding bead) that complements the insufficient overlap in the narrow portion. The information correction unit 47 corrects the control information according to the calculated additional weld amount.

Next, a control information correction method will be described. It is assumed here that an additive plan or a manufacturing program for controlling the additive manufacturing device 100 to build a manufactured object has been prepared, or that correspondence information corresponding thereto has been prepared in advance. The control information correction method corrects the prepared additive plan or manufacturing program or the correspondence information.

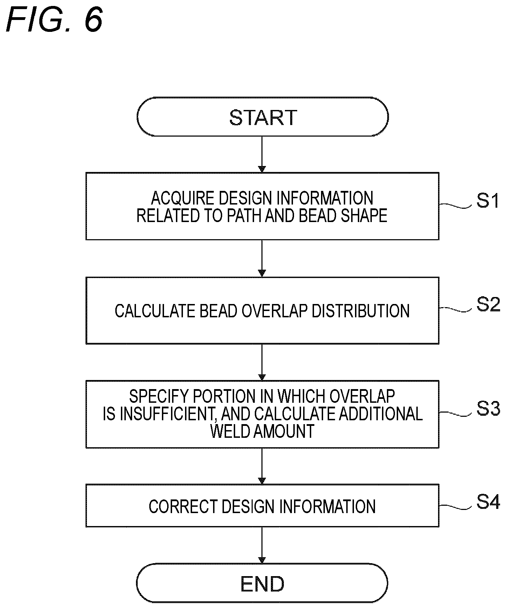

FIG. 6 is a flowchart illustrating a procedure of the control information correction method. The design information acquisition unit 41 reads information on the prepared additive plan or manufacturing program, and acquires design information including information related to a planned manufacturing path and information related to a shape of the welding beads, that is, the welding conditions (S1). Examples of the welding conditions include parameters such as a welding current, a welding voltage, a filler metal feeding speed, and a travel speed.

Next, the overlap prediction unit 43 obtains the bead models of the welding beads determined according to the acquired path and the welding conditions, and predicts an in-layer distribution of the welding beads to be formed at the time of building using the bead models. Then, a distribution of an overlap region between the bead models is obtained based on the predicted in-layer distribution of the bead models (S2). The distribution of the overlap region is defined as a first overlap distribution.

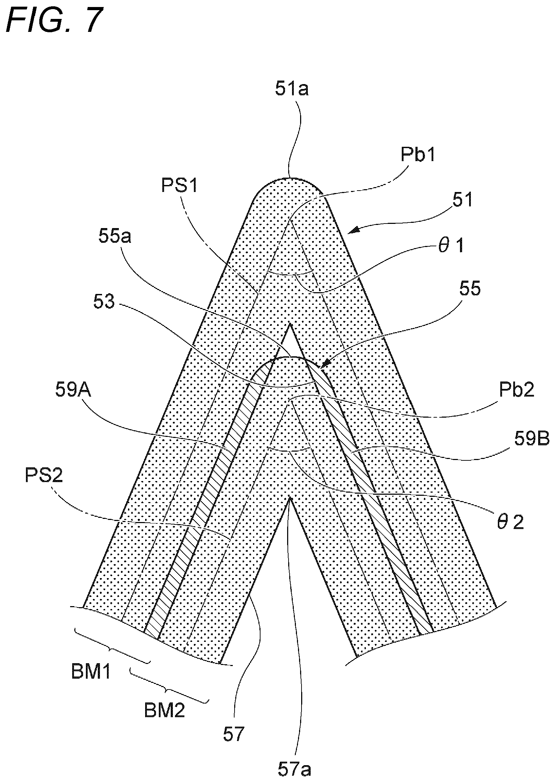

FIG. 7 is a diagram illustrating a part of the in-layer distribution of the welding beads. Here, a folded angular path PS1 in which a welding bead is bent and the bead model BM1 formed in the path PS1, and a path PS2 disposed inside the bending and the bead model BM2 formed in the path PS2 are shown. The path P1 is bent at a bending point Pb1, and the inner path P2 is bent at a bending point Pb2. A folded angle θ1 of the path P1 and a folded angle θ2 of the path P2 are acute angles and are substantially equal to each other. The folded angles θ1 and θ2 of the paths P1 and P2 shown here are acute angles, and may be right angles or obtuse angles.

In the bead model BM1 disposed on the outside, an outer edge convex portion 51a in an outer edge 51 at the bending point Pb1 in a bead width direction orthogonal to the bead longitudinal direction is formed in an arc shape. An inner edge concave portion 53a in an inner edge 53 at the bending point Pb1 is formed in a bent shape with little curvature. Similarly, in the bead model BM2 disposed on the inside, an outer edge convex portion 55a in an outer edge 55 at the bending point Pb2 in the bead width direction is formed in an arc shape. An inner edge concave portion 57a in an inner edge 57 at the bending point Pb2 is formed in a bent shape with little curvature.

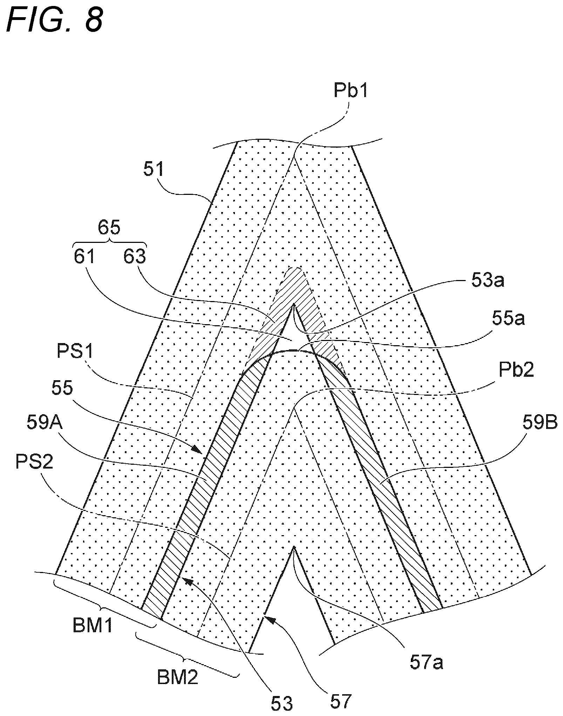

FIG. 8 is a partially enlarged diagram illustrating bent portions in FIG. 7 in an enlarged manner. The bead model BM1 and the bead model BM2 have overlap regions 59A and 59B in which adjacent sides partially overlap each other. The overlap regions 59A and 59B are not formed in regions serving as top portions of the respective bending, and are divided into the overlap region 59A along the linear paths PS1 and PS2 on a left side in FIG. 8 and the overlap region 59B along the linear paths PS1 and PS2 on a right side in FIG. 8. That is, in the bent portions between the bead model BM1 and the bead model BM2, an underfill portion 61 having no welding bead is formed between the inside of the bead model BM1 and the outside of the bead model BM2.

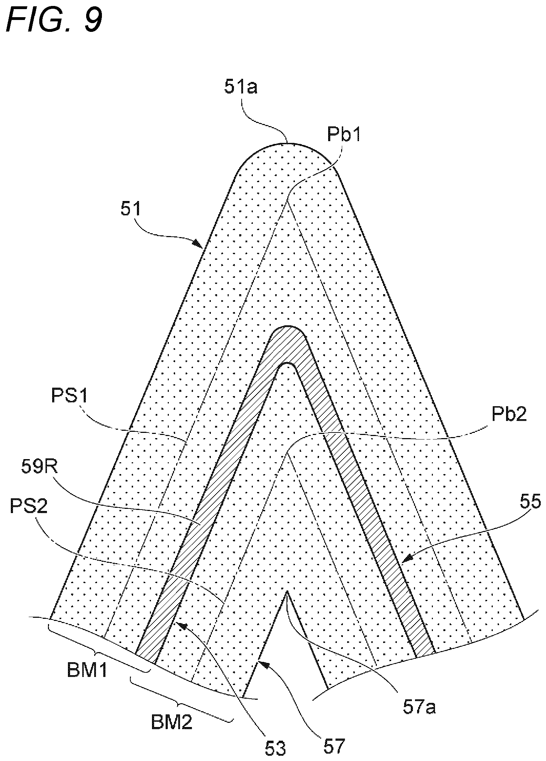

FIG. 9 is a diagram illustrating a continuous overlap region 59R in the bent portions corresponding to FIG. 7. In the additive manufacturing, it is desirable that the overlap regions also are continuously formed along the path PS1 and path PS2 at the bent portions between the path PS1 and path PS2, and a uniform overlap state is obtained. By forming the same uniform overlap regions as those of the linear portions in the bent portions, it is possible to make the additive heights in the bent portions uniform. An ideal overlap region 59R having a continuous overlap width along the paths PS1 and PS2 is defined as a second overlap distribution.

When the ideal overlap region (second overlap distribution) 59R illustrated in FIG. 9 is compared with the overlap regions (first overlap distribution) 59A and 59B of the bead models BM1 and BM2 illustrated in FIG. 8, both of differences are that there is the underfill portion 61 in which no welding bead is formed and an overlap insufficient portion 63 in which no overlap with the existing bead model BM1 is formed around the underfill portion 61. According to the present invention, a region obtained by combining the underfill portion 61 and the overlap insufficient portion 63 is referred to as a "narrow portion 65". By complementing the narrow portion 65 with the additional weld amount corresponding to the insufficient portion from the above-described ideal overlap region (second overlap distribution) 59R, a region obtained by combining a region including the underfill portion 61 filled by the additional weld amount and the original overlap regions 59A and 59B is approximated to the ideal overlap region 59R. More preferably, both can be made equal. In this way, it is preferable to calculate the additional weld amount in accordance with a difference amount between the first overlap distribution and the second overlap distribution.

The additional amount calculation unit 45 specifies a region of the above-described narrow portion 65 based on the information on the first overlap distribution, and calculates an additional weld amount of a welding bead for complementing the underfill and the insufficient overlap in the narrow portion 65 (S3). To specify the region of the narrow portion 65, a region in which the overlap regions (first overlap distribution) 59A and 59B are discontinuous is obtained with reference to the bead models BM1 and BM2 formed in the paths PS1 and PS2. The narrow portion 65 may be specified from a portion in which a difference between the first overlap distribution and the second overlap distribution occurs. In this case, the narrow portion can be more easily extracted by simple comparison between the overlap distributions.

The additional amount calculation unit 45 obtains an amount of a processing material (welding bead) with which the underfill portion 61 generated by the bead models in the bead layer is filled as an underfill complementary amount. In a case in which the welding bead corresponding to the underfill complementary amount is formed in the underfill portion 61, a fusion surface obtained by fusing the welding bead formed according to the underfill complementary amount and a part of the welding beads corresponding to the bead models BM1 and BM2 around the underfill portion 61, that is, a molten and solidified surface of the welding beads is formed. The additional amount calculation unit 45 obtains an amount of a processing material (welding bead) to be added to align the fusion surface with the surface height of the welding beads around the underfill portion 61. Then, the additional amount calculation unit 45 sets a total value of the underfill complementary amount thus obtained and a height adjustment complementary amount to the additional weld amount. The term "aligning the fusion surface with the surface height" as used herein preferably means making a surface flat with a uniform height, the fusion surface does not necessarily have to be the flat surface, and may be flat enough to ensure a shape precision of a manufactured object to be additively manufactured.

An insufficient overlap amount in the narrow portion 65 is preferably calculated by the geometric calculation on a plane illustrated in FIG. 8. In this case, the additional weld amount can be easily calculated without requiring a three-dimensional complicated volume calculation. In addition, properties of an actual surface of the welding bead such as three-dimensional unevenness may be corrected in consideration of the above-described geometric calculation. For example, the correction can be performed by using a three-dimensional bead model having a simple shape simulating the actual shape of the welding bead. In this case, the additional weld amount can be calculated with higher accuracy while reducing a calculation amount of the volume calculation.

Further, a plurality of types of additional weld amounts may be prepared in advance as table values, a difference between an overlap amount after adding each additional weld amount and an overlap amount of an ideal welding metal may be obtained, and an additional weld amount with a small difference may be selected. In this way, the additional weld amount can be determined easily with a single calculation without separately calculating the underfill portion 61 and the overlap insufficient portion 63.

Next, the information correction unit 47 corrects the above-described design information according to the obtained additional weld amount (S4). That is, the overlap region between the bead models BM1 and BM2 is made close to or equal to the ideal overlap region 59R.

As specific correction contents of the control information according to the additional weld amount, for example, in the inner path PS2 illustrated in FIG. 8, it is possible to locally increase the weld amount such as lowering a travel speed in the vicinity of a corner portion of the bending and increasing the filler metal feeding speed.

In addition, a path may be extended toward the outside of the bending (bending point Pb1 side) at the bending point Pb2 of the path PS2. In this case, the additive height of the overlap region between the bead models BM1 and BM2 may be predicted by a separate calculation, and at least one of an extension direction and an extension amount of the path may be adjusted to have a uniform height while comparing the additive height of the overlap region with the additive height of the peripheral portion. Further, the extension of the path is not limited to the extension in one direction, and the path may be extended in a zigzag shape or the like as in weaving welding.

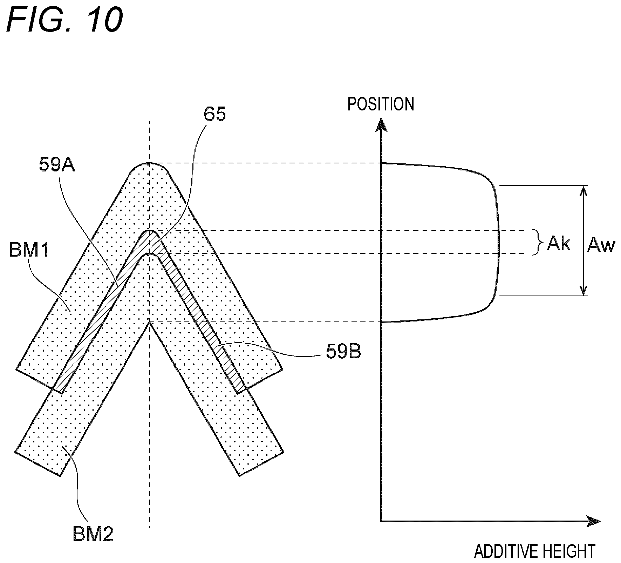

FIG. 10 is a diagram schematically illustrating a predicted distribution of an additive height in the bent portions of the bead models BM1 and BM2. As described above, it is preferred to correct the design information so that not only a region Ak of the narrow portion 65 but also a region Aw other than the overlap regions around the narrow portion 65 has a uniform height distribution.

The design information is corrected so that the difference in the additive height in the narrow portion 65 falls within a predetermined range. When the difference in the additive height does not fall within the predetermined range by one correction, the correction may be repeated until the difference falls within the predetermined range. That is, when the obtained additional weld amount is insufficient due to the shape or the like of the narrow portion, the difference (insufficient portion) of the additive height is obtained by a calculation, and the additional weld amount is increased until the obtained difference becomes equal to or less than a predetermined value. On the other hand, when the additive height is excessive, the additional weld amount added is reduced and the difference is adjusted to fall within the predetermined range. Accordingly, it is possible to reliably prevent the deviation of the height distribution of the welding beads, and it is possible to build a manufactured object having a desired additive height with high accuracy.

As described above, according to the control information correction method, the overlap region between the bead models obtained based on the design information is obtained, the narrow portion is specified based on the distribution of the overlap region, and an additional weld amount to be added to the narrow portion is obtained according to the total value of the underfill complementary amount of the underfill portion and the height adjustment complementary amount for aligning a height of the fusion surface. By correcting the control information of the additive manufacturing device according to the additional weld amount, it is possible to correct the control information to the additive manufacturing device so that the welding beads having a uniform height can also be formed without causing underfill in the case in which the narrow portion 65 is generated by the beads to be formed. Accordingly, for example, the welding beads having a uniform height can also be formed without causing underfill in a portion in which a path for forming welding beads has a folded angular shape.

The narrow portion 65 in which the overlap between the beads is insufficient is generated not only at the bending points of the paths but also at a position at which the paths butt into a T-shape.

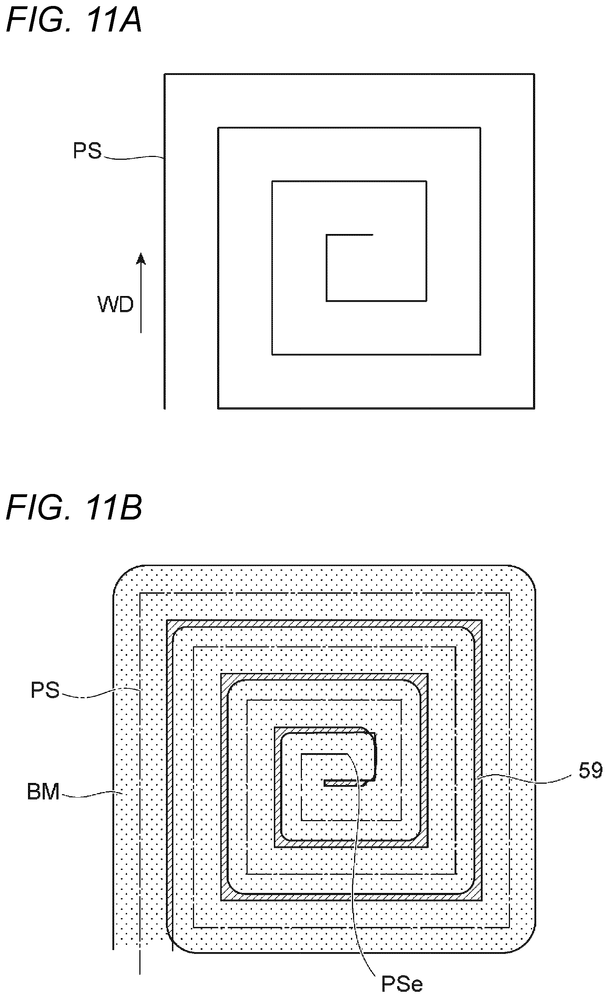

FIG. 11A is a diagram illustrating a path formed in a spiral shape. FIG. 11B is a diagram illustrating a spiral bead model formed in the path illustrated in FIG. 11A. The path PS illustrated in FIG. 11A is a linear path that is continuously formed in a spiral shape from the outside to the inside along a welding direction WD. In the bead model BM corresponding to the path PS, the bead model BM formed in the inner path PS and the bead model BM formed in the outer path PS have the overlap region 59. As illustrated in FIG. 11B, the bead model BM formed at an inner path end part PSe is arranged such that the periphery thereof fills the inside of a wall portion surrounded by the bead model BM.

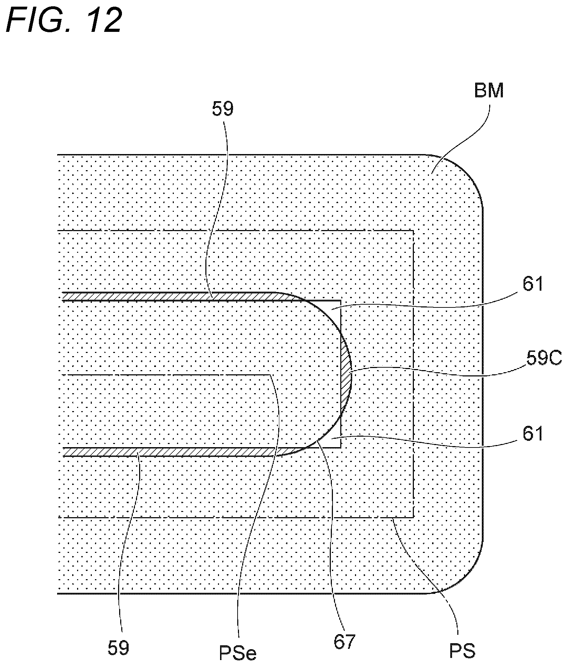

FIG. 12 is an enlarged diagram illustrating the details of a part of the path end part PSe in FIG. 11B. An outer edge of a tip end edge of a welding bead to be formed actually is curved. On the other hand, if the previously formed welding bead is the linear path PS, the inner edge of the welding bead is linear, and is likely to become a linear inner edge as described above at the bent portions. Therefore, in the path end part PSe, a welding bead having a curved tip end abuts in a T-shape against a side surface of a linear welding bead formed in a rectangular dead end.

FIG. 12 illustrates a predicted shape of the welding bead using the bead model BM. A tip end edge 67 of an end part of the bead model BM is curved by simulating a tip end shape of the welding bead. Even if a part of the tip end edge 67 curved in this manner is made to approach the bead model BM facing the tip end edge 67 to the extent that overlap regions 59C are generated, the underfill portions 61 are generated on both sides in the bead width direction at the tip end of the bead model BM.

For such underfill portions 61, an insufficient overlap may be complemented as in the above-described procedure. In this case, first, the first overlap distribution in which the beads overlap each other in the bead layer is obtained based on the design information. Next, the narrow portions (the underfill portions 61) in which the overlap is insufficient are specified based on the first overlap distribution, and the additional weld amount of the welding bead for complementing the insufficient overlap is calculated for the specified narrow portions. Then, the control information is corrected according to the calculated additional weld amount. Accordingly, it is possible to prevent the generation of an unweld underfill portion in the narrow portion, and it is possible to form the welding beads with a uniform additive height.

### <Second Configuration Example of Control Information Correction Device>

Next, a second configuration example of the control information correction device will be described.

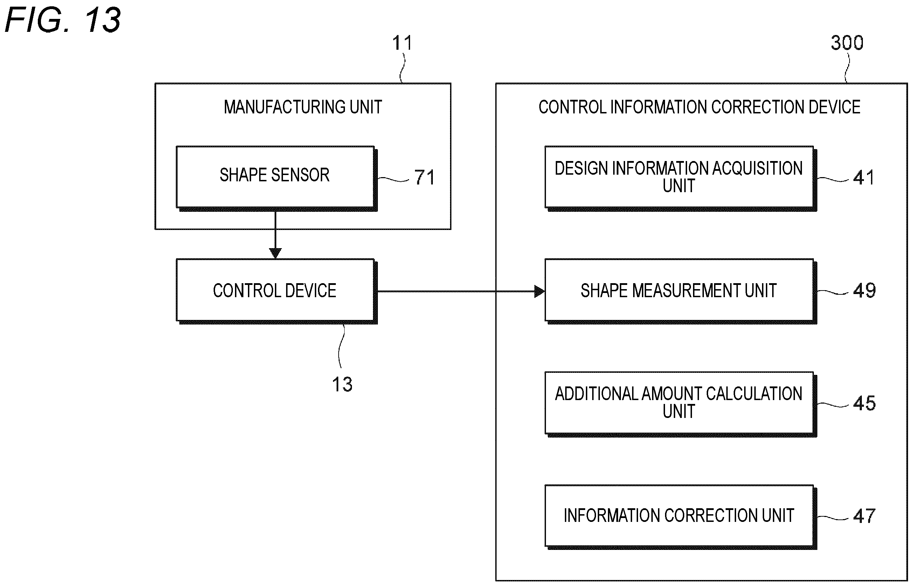

FIG. 13 is a functional block diagram of a second configuration example of a control information correction device 300.

The control information correction device 300 includes a shape measurement unit 49 instead of the overlap prediction unit 43 in the control information correction device 200 of the first configuration example illustrated in FIG. 5. The shape measurement unit 49 receives output information from a shape sensor 71 provided in the manufacturing unit 11 via the control device 13.

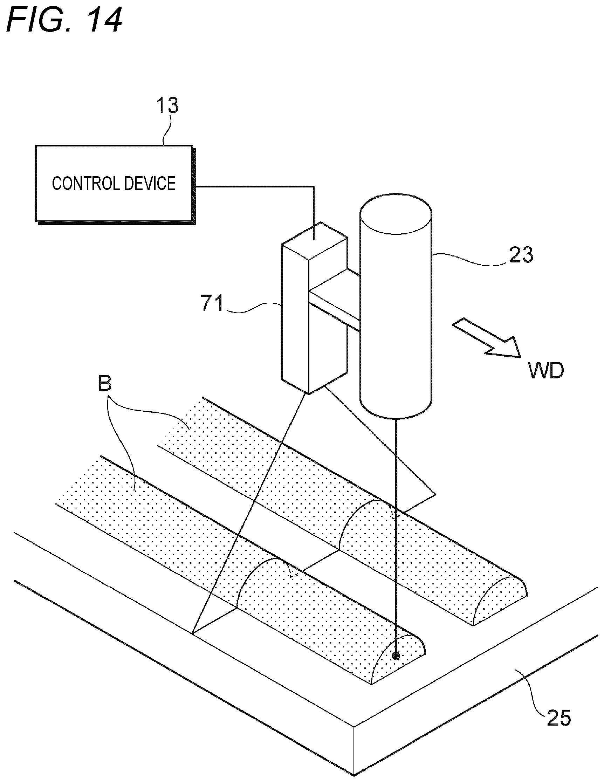

FIG. 14 is a schematic diagram illustrating the shape sensor 71 provided in the welding torch 23. As the shape sensor 71, for example, a laser sensor that acquires reflected light of emitted laser light as height information can be used. In addition, a camera for three-dimensional shape measurement may be used as the shape sensor 71. For example, in a case of measuring a shape by using an optical cutting method, an irradiation unit of the laser sensor irradiates a surface to be measured with slit light, and the light reflected from the surface to be measured is detected by a detection unit to obtain a shape profile. By repeating the processing while changing an irradiation position, a three-dimensional height distribution of the surface to be measured is obtained.

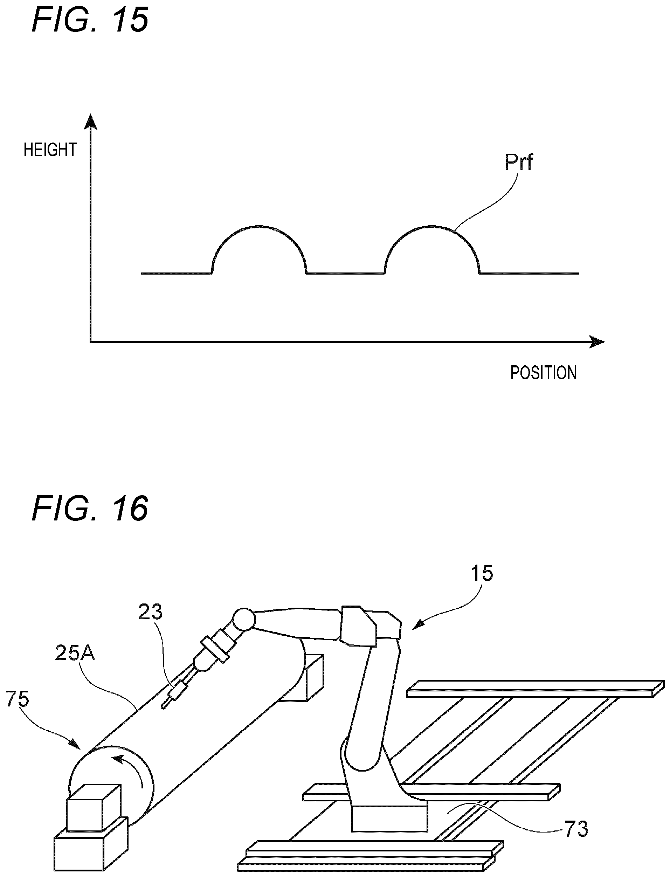

FIG. 15 is a graph illustrating a shape profile which is a measurement result made by the shape sensor 71. Surface shapes of two rows of welding beads B illustrated in FIG. 14 are detected as a shape profile Prf having two convex portions by the shape sensor 71. The shape sensor 71 is integrally fixed to the welding torch 23, and the welding torch 23 moves in the welding direction WD, and thus the height distribution on the plane can be measured simultaneously with the bead formation. An arrangement place of the shape sensor 71 is not limited to the welding torch 23, and may be in the vicinity of the tip end shaft of the manipulator.

According to the control information correction device 300, the above-described additional weld amount can be calculated using a measurement result obtained by measuring the bead shape during the depositing of the welding beads.

That is, the design information acquisition unit 41 acquires the design information related to the path and the shape of the welding bead. The shape measurement unit 49 measures the bead shape on the bead layer formed based on the design information by the control device 13 controlling the manufacturing unit 11 using the shape sensor 71. Then, the additional amount calculation unit 45 obtains an underfill complementary amount of the processing material (welding bead) with which an underfill portion that may be generated by the welding beads in the bead layer is filled according to the measurement result of the bead shape after formation. Further, a height adjustment complementary amount for aligning the fusion surface of the welding metal formed by fusing the welding bead corresponding to the underfill complementary amount and a part of the welding beads around the underfill portion by heat input during the welding with the surface height around the underfill portion is obtained. The underfill complementary amount and the height adjustment complementary amount are obtained based on the overlap distribution obtained according to the measurement results of the bead shape and the bead models based on the design information.

The additional amount calculation unit 45 calculates an additional weld amount which is a total value of the obtained underfill complementary amount and height adjustment complementary amount. The information correction unit 47 corrects the control information (additive conditions) for forming a welding bead adjacent to the measured welding bead according to the calculated additional weld amount.

The bead shape may be measured simultaneously with the formation operation of the welding bead or may be measured after the formation of the welding beads is completed. For example, the bead shape of the welding beads formed in the path PS1 illustrated in FIG. 7 may be measured, and the conditions for forming the welding beads in the subsequently formed path PS2 may be changed according to the shape of the welding beads formed in the path PS1. In this case, the shape measurement result of the existing welding beads is used, and thus it is also possible to take into account the meandering or the like of the welding beads, and it is possible to more accurately calculate a weld amount to be added.

The present invention is not limited to the above-described embodiments, and combinations of the respective configurations of the embodiments and changes and applications made by those skilled in the art based on the description of the specification and well-known techniques are also intended for the present invention and are included in the scope of protection.

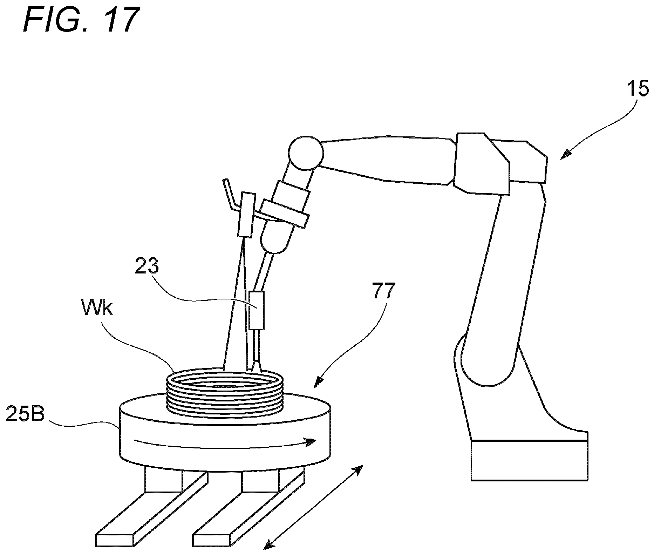

An operation of moving the above-described processing position is not limited to an operation of driving the manipulator 15 of the additive manufacturing device 100 illustrated in FIG. 1. For example, as illustrated in FIG. 16, when the manipulator 15 is disposed on a slider 73 that is movable on a horizontal plane, and a columnar base 25A is supported by a rotatable positioner 75, the operation of moving the processing position may include an operation of moving the formation position of the welding bead by driving at least one of the slider 73 and the positioner 75. Further, as illustrated in FIG. 17, when the base 25B is supported by the positioner 77 capable of being driven to rotate and move linearly and the manufactured object Wk is built on the base 25, the operation of moving the processing position may include an operation of moving the formation position of the welding bead by driving the positioner 77.

According to the method for correcting control information for controlling an additive manufacturing device, the overlap region between the bead models obtained based on the design information is obtained, the narrow portion is specified based on the distribution of the overlap region, and an additional weld amount to be added to the narrow portion is obtained according to the total value of the underfill complementary amount of the underfill portion and the height adjustment complementary amount for aligning a height of the fusion surface. By correcting the control information of the additive manufacturing device according to the additional weld amount, it is possible to prevent the generation of the underfill portion when the manufactured object is built and to make the additive height of the beads uniform.

According to the control information correction method, the additional weld amount is calculated according to the difference amount between the first overlap distribution and the second overlap distribution, and thus the additional weld amount can be calculated easily by a single calculation without separately calculating volumes of the underfill portion and the periphery of the underfill portion.

According to the method for correcting control information for controlling an additive manufacturing device, the narrow portion can be easily specified based on the difference between the first overlap distribution and the second overlap distribution.

According to the method for correcting control information for controlling an additive manufacturing device, the difference between the additive height of the narrow portion and the additive height around the narrow portion falls within the predetermined range, and thus the manufactured object having a desired additive height can be accurately built.

### REFERENCE SIGNS LIST

11: manufacturing unit
13: control device
15: manipulator
17: manipulator control unit
19: filler metal supply unit
19a: reel
19b: feeding mechanism
21: heat source control unit
23: welding torch
25, 25A, 25B, 27: base
31: base
33: arc
35: base
37a, 37b: dripping portion
41: design information acquisition unit
43: overlap prediction unit
45: additional amount calculation unit
47: information correction unit
49: shape measurement unit
51: outer edge
51a: outer edge convex portion
53: inner edge
53a: inner edge concave portion
55: outer edge
55a: outer edge convex portion
57: inner edge
57a: inner edge concave portion
59, 59A, 59B, 59C: overlap region (first overlap distribution)
59R: overlap region (second overlap distribution)
61: underfill portion
63: overlap insufficient portion
65: narrow portion
67: tip end edge
71: shape sensor
73: slider
75, 77: positioner
100: additive manufacturing device
200, 300: control information correction device
Ak, Aw: region
B: welding bead (bead)
BM: bead model
BM0: rectangular bead model
BM1, BM2, BM3, BMn: model
L1, L2, L3, L4: layer
M: filler metal
P: target position
PS, P1, P2, P3: path
Pb1, Pb2: bending point
PSe: path end part
WD: welding direction
Wk: manufactured object
P: target position
PS, P1, P2, P3: path
Pb1, Pb2: bending point
PSe: path end part
WD: welding direction
Wk: manufactured object

## Claims

1. A method for correcting control information for controlling an additive manufacturing device (100) that forms bead layers by overlapping a part of adjacent beads (B) obtained by welding a molten processing material to a surface to be processed while moving a processing position along a path, and builds a three-dimensional manufactured object (Wk) by depositing the bead layers, the method comprising:
acquiring (S1) design information related to the path and a shape of the beads (B);
the method being **characterised by** the following steps:
obtaining (S2) bead models (BM, BM1-BM3) of the beads (B) formed in the bead layer based on the design information and obtaining a first overlap distribution (59, 59A, 59B, 59C) by predicting an overlap region in which the bead models (BM, BM1-BM3) overlap each other;
specifying (S3) a narrow portion (65) in which an overlap between the bead models (BM, BM1-BM3) is insufficient based on the first overlap distribution (59, 59A, 59B, 59C), wherein the narrow portion (65) is obtained by combining an underfill portion (61) in which no welding bead is formed and an overlap insufficient portion (63) in which no overlap with the bead models (BM, BM1-BM3) is formed around the underfill portion (61), and calculating an additional weld amount of the processing material that complements the insufficient overlap in the narrow portion (65); and
correcting (S4) the control information according to the additional weld amount, wherein
the additional weld amount is a total value of an underfill complementary amount of the processing material with which the underfill portion (61) generated by the bead models (BM, BM1-BM3) in the bead layer is filled and a height adjustment complementary amount for aligning a fusion surface formed by fusing the processing material corresponding to the underfill complementary amount and a part of the beads (B) corresponding to the bead models (BM, BM1-BM3) around the underfill portion (61) with a surface height around the underfill portion (61).

2. The method according to claim 1, further comprising:
obtaining a second overlap distribution (59R) in which an overlap between the adjacent bead models (BM, BM1-BM3) in the bead layer is set to a continuous overlap width along the path based on information on the path; and
calculating the additional weld amount according to a difference amount between the first overlap distribution (59, 59A, 59B, 59C) and the second overlap distribution 59R).

3. The method according to claim 1, further comprising:
obtaining a second overlap distribution (59R) in which an overlap between the adjacent bead models (BM, BM1-BM3) in the bead layer is set to a continuous overlap width along the path based on information on the path; and
specifying the narrow portion (65) from a portion at which a difference between the first overlap distribution (59, 59A, 59B, 59C) and the second overlap distribution (59R) occurs.

4. The method according to claim 1, further comprising:
calculating an additive height of the narrow portion (65) to which the additional weld amount is added and an additive height around the narrow portion (65); and
correcting the control information so that a difference between the additive height of the narrow portion (65) and the additive height around the narrow portion (65) falls within a predetermined range.

## Patentansprüche

1. Verfahren zum Korrigieren von Steuerungs- bzw. Regelungsinformationen zum Steuern bzw. Regeln einer Vorrichtung (100) zur additiven Fertigung, welche Wulst- bzw. Raupenschichten durch Überlappen eines Teils benachbarter bzw. angrenzender Wulste bzw. Raupen (B), die durch Verschweißen eines geschmolzenen Verarbeitungsmaterials mit einer zu bearbeitenden Fläche bzw. Oberfläche unter Bewegung einer Bearbeitungsposition entlang eines Pfades erhalten werden, und ein dreidimensionales Fertigungsobjekt (Wk) durch Abscheiden bzw. Anordnen der Raupenschichten aufbaut, wobei das Verfahren umfasst:
Erfassen (S1) von Designinformationen bezüglich des Pfades und einer Form der Raupen (B);
wobei das Verfahren durch die folgenden Schritte gekennzeichnet ist:
Erhalten (S2) von Wulst- bzw. Raupenmodellen (BM, BM1-BM3) der in der Raupenschicht gebildeten Raupen (B) basierend auf den Designinformationen und Erhalten einer ersten Überlappungsverteilung (59, 59A, 59B, 59C) durch Vorhersagen eines Überlappungsbereichs, in dem die Raupenmodelle (BM, BM1-BM3) einander überlappen;
Spezifizieren (S3) eines schmalen Abschnitts (65), in dem eine Überlappung zwischen den Raupenmodellen (BM, BM1-BM3) unzureichend ist, basierend auf der ersten Überlappungsverteilung (59, 59A, 59B, 59C), wobei der schmale Abschnitt (65) durch Kombination eines Unterfüllungsabschnitts (61), in dem keine Schweißraupe gebildet wird, und eines Abschnitts (63) unzureichender Überlappung, in dem keine Überlappung mit den Raupenmodellen (BM, BM1-BM3) um den Unterfüllungsabschnitt (61) herum gebildet wird, erhalten wird, und Berechnen einer zusätzlichen Schweißmenge des Verarbeitungsmaterials, welche die unzureichende Überlappung in dem schmalen Abschnitt (65) komplementiert; und
Korrigieren (S4) der Steuerungs- bzw. Regelungsinformationen gemäß der zusätzlichen Schweißmenge, wobei
die zusätzliche Schweißmenge ein Gesamtwert ist aus einer Unterfüllungsergänzungsmenge des Verarbeitungsmaterials, mit welcher der durch die Raupenmodelle (BM, BM1-BM3) in der Raupenschicht erzeugte Unterfüllungsabschnitt (61) gefüllt wird, und einer Höhenanpassungsergänzungsmenge zum Angleichen einer Verschmelzungsfläche bzw. -oberfläche, die durch Verschmelzen des der Unterfüllungsergänzungsmenge entsprechenden Verarbeitungsmaterials und eines Teils der den Raupenmodellen (BM, BM1-BM3) entsprechenden Raupen (B) um den Unterfüllungsabschnitt (61) herum gebildet wird, an eine Flächen- bzw. Oberflächenhöhe um den Unterfüllungsabschnitt (61) herum.

2. Verfahren nach Anspruch 1, ferner umfassend:
Erhalten einer zweiten Überlappungsverteilung (59R), bei der eine Überlappung zwischen den benachbarten Raupenmodellen (BM, BM1-BM3) in der Raupenschicht basierend auf Informationen über den Pfad auf eine kontinuierliche Überlappungsbreite entlang des Pfads eingestellt wird; und
Berechnen der zusätzlichen Schweißmenge gemäß einer Differenzmenge zwischen der ersten Überlappungsverteilung (59, 59A, 59B, 59C) und der zweiten Überlappungsverteilung (59R).

3. Verfahren nach Anspruch 1, ferner umfassend:
Erhalten einer zweiten Überlappungsverteilung (59R), bei der eine Überlappung zwischen den benachbarten Raupenmodellen (BM, BM1-BM3) in der Raupenschicht basierend auf Informationen über den Pfad auf eine kontinuierliche Überlappungsbreite entlang des Pfads eingestellt wird; und
Spezifizieren des schmalen Abschnitts (65) anhand eines Abschnitts, an dem eine Differenz zwischen der ersten Überlappungsverteilung (59, 59A, 59B, 59C) und der zweiten Überlappungsverteilung (59R) auftritt.

4. Verfahren nach Anspruch 1, ferner umfassend:
Berechnen einer additiven Höhe des schmalen Abschnitts (65), dem die zusätzliche Schweißmenge hinzugefügt wird, und einer additiven Höhe um den schmalen Abschnitt (65) herum; und
Korrigieren der Steuerungs- bzw. Regelungsinformationen so, dass eine Differenz zwischen der additiven Höhe des schmalen Abschnitts (65) und der additiven Höhe um den schmalen Abschnitt (65) herum in einen vorbestimmten Bereich fällt.

## Revendications

1. Procédé de correction d'informations de commande pour commander un dispositif de fabrication additive (100) qui forme des couches de cordon en chevauchant une partie de cordons adjacents (B) obtenus en soudant un matériau d'usinage fondu à une surface devant être usinée tout en déplaçant une position d'usinage le long d'un trajet, et construit un objet fabriqué tridimensionnel (Wk) en déposant les couches de cordon, le procédé comprenant :
acquérir (S1) des informations de conception liées au trajet et à une forme des cordons (B) ;
le procédé étant **caractérisé par** les étapes suivantes :
obtenir (S2) des modèles de cordon (BM, BM1 à BM3) des cordons (B) formés dans la couche de cordon en fonction des informations de conception et obtenir une première distribution de chevauchement (59, 59A, 59B, 59C) en prédisant une région de chevauchement dans laquelle les modèles de cordon (BM, BM1 à BM3) se chevauchent l'un l'autre ;
spécifier (S3) une portion étroite (65) dans laquelle un chevauchement entre les modèles de cordon (BM, BM1 à BM3) est insuffisant en fonction de la première distribution de chevauchement (59, 59A, 59B, 59C), dans lequel la portion étroite (65) est obtenue en combinant une portion à manque de métal (61) dans laquelle aucun cordon de soudure n'est formé et une portion à chevauchement insuffisant (63) dans laquelle aucun chevauchement avec les modèles de cordon (BM, BM1 à BM3) n'est formé autour de la portion à manque de métal (61), et calculer une quantité de soudure supplémentaire du matériau d'usinage qui complète le chevauchement insuffisant dans la portion étroite (65) ; et
corriger (S4) les informations de commande en fonction de la quantité de soudure supplémentaire, dans lequel
la quantité de soudure supplémentaire est une valeur totale d'une quantité complémentaire de manque de métal du matériau d'usinage avec laquelle la portion à manque de métal (61) générée par les modèles de cordon (BM, BM1 à BM3) dans la couche de cordon est remplie et une quantité complémentaire d'ajustement de hauteur pour aligner une surface de fusion formée en fusionnant le matériau d'usinage correspondant à la quantité complémentaire de manque de métal et une partie des cordons (B) correspondant aux modèles de cordon (BM, BM1 à BM3) autour de la portion à manque de métal (61) avec une hauteur de surface autour de la portion à manque de métal (61).

2. Procédé selon la revendication 1, comprenant en outre :
obtenir une seconde distribution de chevauchement (59R) dans laquelle un chevauchement entre les modèles de cordon adjacents (BM, BM1 à BM3) dans la couche de cordon est réglé sur une largeur de chevauchement continue le long du trajet en fonction d'informations sur le trajet ; et
calculer la quantité de soudure supplémentaire en fonction d'une quantité de différence entre la première distribution de chevauchement (59, 59A, 59B, 59C) et la seconde distribution de chevauchement (59R).

3. Procédé selon la revendication 1, comprenant en outre :
obtenir une seconde distribution de chevauchement (59R) dans laquelle un chevauchement entre les modèles de cordon adjacents (BM, BM1 à BM3) dans la couche de cordon est réglé sur une largeur de chevauchement continue le long du trajet en fonction d'informations sur le trajet ; et
spécifier la portion étroite (65) à partir d'une portion au niveau de laquelle une différence entre la première distribution de chevauchement (59, 59A, 59B, 59C) et la seconde distribution de chevauchement (59R) se produit.

4. Procédé selon la revendication 1, comprenant en outre :
calculer une hauteur additive de la portion étroite (65) à laquelle la quantité de soudure supplémentaire est ajoutée et une hauteur additive autour de la portion étroite (65) ; et
corriger les informations de commande de sorte qu'une différence entre la hauteur additive de la portion étroite (65) et la hauteur additive autour de la portion étroite (65) tombe au sein d'une plage prédéterminée.
